# EUROPÄISCHE PATENTANMELDUNG

(11) **EP 0 731 116 A2**
(43) Veröffentlichungstag der Anmeldung: **11.09.1996**
(21) Anmeldenummer: 96102958.4
(22) Anmeldetag: 28.02.1996
(51) Int. Cl.: C08F 220/14, C08F 265/06, C08L 33/12

(54) **Verfahren zur Herstellung hochgefüllter Kunststoffe**

(30) Priorität: 07.03.1995 DE 19507875
(71) Anmelder: RÖHM GMBH, 64293 Darmstadt (DE)
(72) Erfinder: Krieg, Manfred, Dr., 64289 Darmstadt (DE); Ittmann, Günther, 64823 Gross-Umstadt (DE)

(57) **Zusammenfassung**

Die Erfindung betrifft ein Verfahren zur Herstellung hochgefüllter Kunst-stoffe auf Polymethylmethacrylatbasis nach dem Gießverfahren, ausgehend von einer Polymervorstufe PVS aus Methylmethacrylat und einem Polymethylmethacrylat-Praepolymerisat, die durch Zusatz mindestens eines partikelförmigen anorganischen Füllstoffs FS in Anteilen von 30 bis 80 Gew.-% (bezogen auf die Füllstoff-Suspension) unter hochtourigem Rühren in eine Füllstoff-Suspension FSS überführt und unter Zusatz mindestens eines radikalischen Initiators in einer geeigneten Form polymerisiert wird, wobei man der Füllstoffsuspension FSS verschiedenfarbiges, gefülltes, gemahlenes Polymermaterial GP in Mengen von 1 bis 20 Gew.-Teilen (bezogen auf die Füllstoff-Suspension FSS) unter Rühren zusetzt, mit der Maßgabe, daß die Dichte des Mahlgutmaterials GP genau an die Dichte der Füllstoffsuspension angepaßt wird und daß der polymere Bestandteil des Mahlgutmaterials GP hochvernetzt ist.

## Beschreibung

### Gebiet der Erfindung

Die Erfindung betrifft ein Verfahren zur Herstellung hochgefüllter Kunststoffe auf Polymethylmethacrylatbasis, insbesondere mit Granitcharakter.

### Stand der Technik

Hochgefüllte Gießharzformkörper mit Granitcharakter, insbesondere auf PMMA-Basis haben auf dem Sanitär- und dem übrigen Haushaltssektor eine ganz erhebliche Bedeutung erlangt. Der Gehalt an mineralischem Füllmaterial liegt dabei üblicherweise im Bereich 30 - 80 Gew.-%.
Entsprechende Herstellungsverfahren sind z.B. in den DE-A 26 27 081, US-A 4,159,301, WO 90/01 470, WO 91/11 404 angegeben worden.
Die DE-A 26 27 081 sieht die Anwendung zweier Partikelarten in regelloser Verteilung vor, nämlich von farbigenbzw. ungefärbten undurchsichtigen Partikeln einerseits und farbigen oder ungefärbten durchsichtigen oder transparenten Teilchen andererseits, wobei beide Teilchenarten in der kleinsten Abmessung eine Mindestteilchengröße von > 200 µm aufweisen.
Die JP-A 02,202,445 (Chem. Abstr. 114, 8000t) empfiehlt zur Herstellung von Platten mit Granitcharakter die Extrusionsbeschichtung von thermoplastischen Tafeln mit einer Schicht mit einem Gehalt an Metallpulver und Weißpigment. Granitcharakter wird bei Küchenspülen und Sanitärartikeln aus Acrylharz auch durch Anwendung von Granit-Füllstoffteilchen erreicht (vgl. Modern Plastics International, Sept. 1991, pg. 32). Die so hergestellten Objekte haben eine hohe Füllstoffkonzentration in Oberflächennähe.
Meist geht man bei der Herstellung von Objekten aus hochgefülltem PMMA von einer flüssigen Polymervorstufe aus, der das Füllmaterial zugesetzt und die dann radikalisch nach dem Typus einer Kammerpolymerisation zur Polymerisation gebracht wird.
Bewährt hat sich die Herstellung ausgehend von einer Polymervorstufe aus 70 bis 95 Gew.-Teilen Methylmethacrylat und 5 bis 30 Gew.-Teilen eines PMMA-Praepolymerisats PP und gegebenenfalls bis ca. 5 Gew.-Teilen eines vernetzenden Monomeren und gegebenenfalls bis zu 5 Gew.-Teilen eines Silanisierungsmittels SIM. Zu einer derartigen Polymervorstufe werden unter hochtourigem Rühren partikelförmige anorganische Füllstoffe, insbesondere Aluminiumhydroxid bzw. Aluminiumoxidhydrat in Anteilen von 30 bis 80 Gew.-% (bezogen auf die gebildete Füllstoffsuspension FSS zugegeben und gleichmäßig verteilt.

### Aufgabe und Lösung

Eine übliche Art der Einfärbung von granitartigem Polyacrylatmaterial besteht darin, in eine hochgefüllte Füllstoff-Suspension FSS verschiedenfarbige Mahlgutteilchen mit Teilchendurchmessern bis ca. 5 mm Durchmesser einzurühren und daran anschließend die Polymerisation vorzunehmen. Als derartig verschiedenfarbige Mahlgutteilchen bieten sich vorteilhaft solche aus dem gehärteten, gefüllten Polymermaterial selbst an, beispielsweise gemahlenes Recycling-Material. Die praktische Erfahrung lehrt jedoch, daß im Falle der Einarbeitung von gefülltem, gemahlenem PMMA-Polymermaterial wenigstens zwei gravierende Probleme auftreten:
- Die Mahlgutteilchen sedimentieren in Abhängigkeit von ihrer Teilchengröße und der Dauer bis zum Erreichen des Gelzustands der Polymerisation in stark unterschiedlicher Weise, so daß eine reproduzierbare Struktur nicht erreicht werden kann.
- Die Mahlgutteilchen aus Recyclat quellen in der Füllstoff-Suspension FSS so schnell an, daß der eintretende Viskositätsanstieg das Verfüllen in die Polymerisationskammern nahezu unmöglich macht und bestenfalls eine verwaschene Struktur entsteht.

Es bestand daher die Aufgabe, ein Verfahren zur Verfügung zu stellen, das die Einarbeitung von gefülltem, gemahlenem Polymermaterial gestattet unter Vermeidung der oben genannten Probleme und der daraus resultierenden nachteiligen Folgen für das gebildete Polymermaterial.

Die Lösung der vorliegenden Aufgabe im Rahmen der vorliegenden Erfindung beruht auf einer Kombination zweckmäßiger Maßnahmen.
1. Das Mahlgutmaterial wird in seiner Dichte genau an die Dichte der Füllstoff-Suspension FSS angepaßt. Dadurch wird die Sedimentation auch über längere Zeiten hinweg verhindert und es findet auch keine unterschiedlich starke Sedimentation von unterschiedlich großen Teilchen (keine "Klassierung") statt. Die Dichteanpassung wird zweckmäßig gesteuert über die Füllstoffkonzentration im Mahlgut.
2. Zur Vermeidung des Viskositätsanstiegs innerhalb der Verarbeitungszeit wird das Mahlgutpolymere mit ca. 10 Gew.-% mindestens eines vernetzenden Monomeren vernetzt.

Die Erfindung betrifft somit ein Verfahren zur Herstellung hochgefüllter Kunststoffe auf Polymethylmethacrylatbasis nach dem Gießverfahren, ausgehend von einer Polymervorstufe PVS aus Methylmethacrylat und einem Polymethylmethacrylat-Praepolymerisat, die durch Zusatz mindestens eines partikelförmigen anorganischen Füllstoffs FS in Anteilen von 30 bis 80 Gew.-% (bezogen auf die Füllstoff-Suspension) unter hochtourigem Rühren in eine Füllstoff-Suspension FSS überführt und unter Zusatz mindestens eines radikalischen Initiators in einer geeigneten Form polymerisiert wird, dadurch gekennzeichnet, daß man der Füllstoff-Suspension FSS verschiedenfarbiges, gefülltes, gemahlenes Polymermaterial GP in Mengen von 1 bis 20 Gew.-Teilen (bezogen auf die Füllstoff-Suspension FSS) unter Rühren zusetzt, mit der Maßgabe, daß die Dichte des Mahlgutmaterials GP genau an die Dichte der Füllstoffsuspension angepaßt wird und daß der polymere Bestandteil des Mahlgutmaterials GP vernetzt ist.

Das Mahlgut GP hat in der Regel einen Teilchendurchmesser im Bereich von 0,02 bis ca. 5 mm. Es wird im allgemeinen aus gleichartigem polymerisiertem Material gewonnen, wie dasjenige, aus dem die Füllstoff-Suspension FSS gebildet wird, allerdings unter Beachtung der beanspruchten Merkmale hinsichtlich Dichteanpassung und Vernetzung.
Die Dichteanpassung wird gesteuert über die Füllstoffkonzentration im Mahlgut. Als beispielhafte Ausführung sei etwa genannt eine Konzentration an Aluminiumhydroxid als partikelförmigem anorganischem Füllstoff FS in der Füllstoff-Suspension FSS von 66 Gew.-%, während sich im Mahlgutmaterial GP ca. 40 - 45 Gew-% desselben befinden.
Die Herstellung des polymeren Mahlgutmaterials GP erfolgt nach im wesentlichen gleichem Verfahren wie die Herstellung des PMMA-Basismaterials und es kommen im Prinzip die gleichen Monomeren zur Anwendung, wobei jedoch das Mahlgutmaterial GP stets durch Zusatz eines oder mehrerer vernetzender Monomerer vernetzt ist. Als Vernetzer dienen an sich übliche, mehrere polymerisationsfähige Reste im Molekül enthaltende Monomere, wie z.B. die (Meth)acrylsäureester mehrwertiger Alkohole oder Allylester (vgl. H. Rauch-Puntigam, Th. Völker, Acryl- und Methacrylverbindungen, Springer-Verlag 1986). Genannt seien z.B. Glykoldimethacrylat, 1,4-Butandioldimethacrylat, Trimethylolpropantrimethacrylat, Glykoldiacrylat, Trimethylolpropantriacrylat.
Der Anteil an vernetzenden Monomeren liegt dabei relativ hoch, im allgemeinen bei mindestens 1 Gew.-% und bis zu 20 Gew.-%, beispielsweise um 10 Gew.-% bezogen auf die Gesamtheit der Monomeren. Im unvernetzten Zustand liegt das Molekulargewicht im Bereich 2 x 10⁵ bis 5 x 10⁶ Dalton.

Als Füllstoffe FS eignen sich auch hier die einschlägig für Gießharze verwendeten feinteiligen anorganischen Materialien. Der Gehalt an den Füllstoffen FS wird so bemessen, daß das Mahlgutmaterial GP genau die Dichte der Füllstoff-Suspension FSS besitzt. Das polymere Mahlgutmaterial GP wird vorteilhaft aus zweckmäßig eingefärbtem Polymerisat gewonnen. Als Farbmittel FM können dabei Pigmente oder Farbstoffe der einschlägig verwendeten Art angewendet werden.

Als Beispiele seien Eisenoxid, Titandioxid, Zinkweiß, Ultramarinblau, Cu-Phthalocyanine und Ruß genannt. Die Pigmente können auch als vorgebildete Dispersionen mit Hilfe geeigneter Dispergiermittel in die Praepolymerphase eingebracht werden. Im allgemeinen liegt der Gehalt an den Farbmitteln FM im Bereich 0,2 bis 5 Gew.-% bezogen auf das dem Mahlgutmaterial GP zugrundeliegende Polymer.
Die Herstellung der Füllstoff-Suspension FSS erfolgt zweckmäßig in an sich bekannter Weise (vgl. EP-B 218 866; DE-A 42 25 309). Als Praepolymerisat kommen z.B. die einschlägig verwendeten PMMA-Polymerisate infrage, die gegebenenfalls untergeordnete Anteile an zweckmäßig ausgewählten Comonomeren, wie weitere Acryl- und/oder Methacrylsäureester, insbesondere C₁-C₈-Alkylester enthalten können. Der Anteil der Praepolymerisate liegt bei 5 - 30 Gew.-% bezogen auf die Gesamtheit der polymerisationsfähigen Materialien.
Ferner kann die Füllstoff-Suspension FSS noch an sich bekannte vernetzende Monomere enthalten, beispielsweise solche mit mindestens zwei polymerisationsfähigen Vinylgruppen im Molekül (vgl. H. Rauch-Puntigam, Th. Völker, "Acryl- und Methacrylverbindungen", Steie 184, Springer-Verlag, 1967), wobei exemplarisch Ethylenglykoldimethacrylat, 1,4-Butandioldimethacrylat, Triglykoldimethacrylat, Trimethylolpropantrimethacrylat, bzw. die entsprechenden Acrylate so wie Allylverbindungen wie Allylmethacrylat oder Triallylcyanurat genannt seien. Der Gehalt an vernetzenden Monomeren in der Füllstoff-Suspension FSS liegt im allgemeinen bei 0,01 bis 10 Gew.-%, vorzugsweise bei 0,1 bis 5 Gew.-% bezogen auf den Monomergehalt.
Die Füllstoff-Suspension FSS hat (bezogen auf Praepolymerisat plus Monomere) einen Gehalt von über 60 Gew.-%, speziell von 80 bis 100 Gew.-% an Methylmethacrylat. Als Comonomere können, wie bereits ausgeführt, weitere mit MMA copolymerisierbare Monomere verwendet werden, beispielsweise die schon genannten (Meth)acrylsäureester sowie Vinylaromaten und heterocyclischen Vinylverbindungen, so Z.B. Styrol, ringsubstituierte Styrole, α-Methylstyrol, Vinylpyrrolidon, Vinylimidazol, Acrylnitril und Methacrylnitril, Vinylester wie Vinylacetat oder Vinylpropionat. Im allgemeinen überwiegt neben MMA der Anteil der (Meth)acrylsäureester und der vernetzenden Monomeren, die zusammen mit MMA vorteilhaft bis 100 Gew.-% der gesamten Polymervorstufe ausmachen können. Besonders günstig ist ein Gemisch aus dem Monomeren Methylmethacrylat und einem vernetzenden Monomeren, wie beispielsweise Glykoldimethacrylat, wobei das Gewichtsverhältnis vorteilhaft zwischen 95 : 5 und 99,9 : 0,1 liegt. Vielfach enthält die Polymervorstufe PVS die Monomeren, die auch das Praepolymerisat bilden und in denselben Proportionen, sie können aber auch verschieden sein. Vorzugsweise sind die Praepolymerisate in den Monomeren gelöst, sie können aber auch darin dispergiert sein. In der Regel haben die Praepolymerisate mittlere Molekulargewichte M_{w} im Bereich zwischen 2 x 10⁴ und 8 x 10⁵ Dalton (Bestimmung durch Gelpermeationschromatographie, vgl. hierzu: H.F. Mark et.al. Encyclopedia of Polymer Science and Technology, Vol. 10, Seiten 1 bis 19, J. Wiley, 1987). Beispielsweise kann das Praepolymerisat ein Copolymerisat aus Methylmethacrylat und Methylacrylat im Gewichtsverhältnis 9 : 1 mit einem mittleren Molekulargewicht M_{w} von etwa 2,5 x 10⁵ Dalton sein.
Als partikelförmige anorganische Füllstoffe FS kommen in erster Linie Aluminiumoxide, Aluminiumhydroxide bzw. Aluminiumoxidhydrate infrage. Gegebenenfalls können noch weitere an sich bekannte partikelförmige Füllstoffe wie Erdalkalioxide, Siliciumoxid und/oder Titanoxid in verschiedenen Modifikationen, Tone, Silikate, Metalle oder Metallegierungen, Metall-Oxide, synthetische Materialien wie Keramik, Glasmehl, Porzellan, Schlacke oder feinverteiltes Siliciumdioxid, Quarze, Koalin, Talkum, Glimmer, Feldspat, Apatit, Baryte, Gips, Kreide, Kalkstein, Dolomit oder Gemische der vorstehend genannten Komponenten zur Anwendung kommen.
Zweckmäßig wird bei den anorganischen Füllstoffen eine mittlere Korngröße der Füllstoffteilchen von 100 µm (Durchmesser), vorzugsweise von 75 µm nicht überschritten.
Bei einer besonderen Ausführungsart stellt der Füllstoff ein Gemisch aus mindestens 2 Komponenten dar, deren mittlere Durchschnitts-Korngrößen solchermaßen beschaffen sind, daß ein Größenverhältnis zwischen den mittleren Durchschnittsgrößen der großen Füllstoffteilchen und denjenigen der kleinen Füllstoffteilchen zwischen 10 : 1 und 2 : 1, bevorzugt zwischen 6 : 1 und 4 : 1 vorliegt. Füllstoffteilchen mit einer Korngröße < 0,1 um sollen dabei nicht mehr als 10 % des Volumens aller Füllstoffteilchen ausmachen. Die Teilchengröße wird gemäß den üblichen Verfahren bestimmt, wobei zur Teilchengrößenbestimmung als Durchmesser die jeweils größten Abmessungen der Partikel herangezogen werden (vgl. beispielsweise B. Scarlett, Filtration & Separation, Seite 215, 1965). Das Mengenverhältnis zwischen großen und kleinen Füllstoffteilchen liegt im allgemeinen zwischen 4 : 1 und 1 : 4, bevorzugt zwischen 2 : 1 und 1 : 2, besonders bevorzugt bei 1 : 1.
Bevorzugt ist der anorganische Füllstoff so beschaffen, daß das ausgehärtete Gießharz einen elastischen Schermodul von wenigstens 5 GNm⁻², bevorzugt von wenigstens 10 GNm⁻² aufweist, wobei bei der Einstellung der mechanischen Eigenschaften die vorgesehene Anwendung der Gießharze im Auge zu behalten ist.
Der Füllstoffanteil an den Gießharzen der vorliegenden Erfindung beträgt vorzugsweise mindestens 40 Gew.-%. Im allgemeinen wird ein Anteil von 80 Gew.-% nicht überschritten, wobei als Richtwert ein Füllstoffgehalt der Gießharze von 50 bis 80 Gew.-% angegeben sei. Die Herstellung der Füllstoffe in den zweckmäßigen Korngrößen kann nach den bekannten Verfahren erfolgen, beispielsweise durch Brechen und Mahlen.

### Die Herstellung der Gießharz-Suspensionen

Zweckmäßigerweise geht man bei der Herstellung der Gießharz-Suspensionen von der flüssigen Polymervorstufe aus, welche die Monomeren und die Praepolymerisate enthält und welche die flüssige organische Phase bildet.
In die organische Phase wird nun mit Hilfe mechanischer Dissolver der anorganische Füllstoff FS eingetragen. Bei Anwendung von Fraktionen verschiedener Partikelgröße können die Füllstoffteilchen-Fraktionen einzeln zugegeben werden, wobei die Reihenfolge der Zugabe der Füllstoffteilchen unterschiedlicher Größe nicht festgelegt ist. Der Vorgang ist in der Regel nach 10 Minuten abgeschlossen. Danach wird die Suspension über einen Zeitraum von etwa 10 Minuten am Dissolver oder einem äquivalenten Dispergieraggregat dispergiert, wobei die Umlaufgeschwindigkeit des Dissolvers etwa 10 bis 20 Meter pro Sekunde beträgt. Im allgemeinen werden die anorganischen Füllstoffe der organischen Phase solchermaßen zugegeben, daß die Viskosität nicht über einen Wert von etwa 10 Pa s steigt.
Der Zusatz des Mahlgutmaterials GP geschieht zweckmäßigerweise bei Raumtemperatur zusammen mit den Polymerisationshilfsmitteln. Polymerisationshilfsmittel, wie an sich bekannte Polymerisationsinitiatoren werden in Mengen von 0,1 bis 5 Gew.-% bezogen auf die Monomeren M der Suspension FSS zugesetzt. Als Polymerisationsinitiatoren werden Radikalbildner eingesetzt, deren Zerfall in Radikale thermisch oder durch Redox-Prozesse induziert werden kann. Grundsätzlich sind alle diejenigen geeignet, die bereits bei tiefen Temperaturen einen hohen Radikalstrom liefern (vgl. J. Brandrup, E.H. Immergut, "Polymer Handbook" 3rd. Ed., Kapitel III, Seiten 1 bis 65, J. Wiley, 1989). Zweckmäßigerweise erfolgt der Zusatz der Initiatoren erst kurz vor dem Verfüllen und Aushärten der Gießharz-Suspensionen.
Gegebenenfalls ist es von Vorteil, wenn die Gießharz-Suspension innere und/oder äußere Trennmittel enthält, die das Anhaften des gehärteten Gießharzes an der Form verhindern und eine gute Oberflächenbeschaffenheit der Gießarz-Formteile bewirken. Beispiele für innere Trennmittel sind Fettsäuren sowie deren Alkali- und Erdalkalisalze und Alkylphosphate sowie deren neutralisierte Derivate. Zu geeigneten äußeren Formtrennmitteln gehören auf den Formen befindliche Überzüge, beispielsweise aus Polytetrafluor-ethylen, Polyorganosiloxan oder Polyvinylalkohol.

### Herstellung der Gießharz-Formkörper

Die mit dem Polymerisationsinitiator versetzte, erfindungsgemäße Gießharz-Suspension läßt sich beispielswiese sehr gut in die üblichen Gießformen vergießen. Vorteilhafterweise wird die Suspension vor dem Verfüllen evakuiert. Die Härtung [= Polymerisation der organischen Phase B)] erfolgt vorzugsweise thermisch, beispielsweise durch Erhitzen auf 50 bis 80 Grad C während 20 bis 60 min, wobei die Härtung unter Anwendung von Druck wie auch ohne Druck verlaufen kann.
Mit Hilfe der erfindungsgemäßen Gießharz-Suspensionen lassen sich die vielfältigen Formen füllen und eine technisch einwandfreie Polymerisation durchführen. Auf diese Weise können Platten, Schüsseln, Waschbecken, Spülbecken, WC-Becken, Formkörper für Bauindustrie, Maschinenfundamente, Behälter u.a. hergestellt werden.
Eine weitere vorteilhafte Ausgestaltung der Erfindung ist die kontinuierliche Plattenherstellung auf einem Förderband. Dabei wird die mit einem geeigneten Polymerisationsinitiator versetzte Gießharz-Suspension auf ein laufendes Förderband mit seitlichen Begrenzungen aufgebracht, wobei sie sich aufgrund ihrer niedrigen Viskosität und ihrer geringen Strukturviskosität schnell verteilt und nivelliert. Danach wird die Oberfläche der Suspension mit einem zweiten Metallband abgedeckt. Die Härtung der Suspension kann thermisch entweder durch Heizen der beiden Metallbänder erfolgen oder bei Verwendung geeigneter Redox-Initiatoren auch ohne Fremdheizung durchgeführt werden.
Die Restmonomerengehalte der gehärteten Gießharze liegen unterhalb 1 Gew.-% bezogen auf den Gesamtmonomerenanteil, bevorzugt unter 0,5 Gew.-%.

### Vorteilhafte Wirkungen der Erfindung

Die erfindungsgemäßen Gießharz-Suspensionen lassen sich sehr gut in die üblichen Gießformen vergießen. Damit wird eine große Formenvielfalt, insbesondere mit komplizierten Formen, zugänglich, wobei eine einwandfreie und vollständige Polymerisation gewährleistet ist.
Die konsequente Umsetzung der vorgängig geschilderten Maßnahmen führt im Gießverfahren - auch bei Standzeiten der flüssigen Phase von beispielsweise 2 Stunden - zu einem gefüllten Polymerisat mit **einheitlicher** Struktur auf Ober- und Unterseite der gebildeten Platten. Die Möglichkeit der Verwendung von Ober- und Unterseite einer Platte, vorzugsweise einer solchen mit Granitcharakter stellt einen nicht unerheblichen technischen Vorteil dar.

### BEISPIELE

### Beispiel 1

### Herstellung der hochgefüllten Kunststoff-Platte mit Granit-Charakter

In 296,99 g MMA und 0,01 g 2,4-Dimethyl-6-tert-butylphenol werden 30 g eines PMMA-Perlpolymerisats mit η_{spez/c} = 130 - 140 (PLEXIGUM ® M920, Hersteller: Röhm GmbH) bei ca. 50 Grad C innerhalb 5 Stunden gelöst und danach auf Zimmertemperatur abgekühlt. In diesem Sirup werden 5,0 g Stearinsäure und 3,0 g Glykoldimethacrylat gelöst. Am Dissolver werden unter mäßigem Rühren 332,5 g ALCOA ® C33 (Aluminiumhydroxid mit einer mittleren Teilchengröße von 45 µm), 332,5 g ALCOA ® C333 (Aluminiumhydroxid mit einer mittleren Teilchengröße von 8 µm) und 5 g hochdisperses, amorphes Siliciumdioxid (Produkt AEROSIL ® 200, Hersteller: Degussa) in den Sirup eingetragen. Danach wird die Suspension mit dem Dissolver mit 20 m/sec. ca. 10 Minuten dispergiert. Zu der Suspension rührt man mit einem Flügelrührer 90,2 g Mahlgut gemäß Beispiel 2 und 19,8 g Mahlgut gemäß Beispiel 3 ein. Die Rührzeit beträgt im Normalfall ca. 30 Minuten, kann aber auch deutlich verlängert sein. Danach werden 5 g Bis-(4-tert.-butylcyclohexyl)-peroxidicarbonat und 1 g 2,2'-Azobis(isobutyronitril) gelöst und die eingeschlossenen Luftbläschen unter Anlegen eines Vakuums innerhalb sehr kurzer Zeit aus der Suspension entfernt.
Aus zwei hochglanzpolierten und verchromten Metallplatten (Dicke 4 mm) wird mit Hilfe einer runden PVC-Schnur (Durchmesser 4,2 mm) eine Kammer gebaut. In den Zwischenraum der Metallkammer wird die Suspension eingegossen und die Kammer verschlossen.

Die gefüllte Kammer wird in ein Wasserbad von 65 Grad C eingelegt. Die Polymerisationszeit beträgt 20 Minuten. Anschließend wird in einem Trockenschrank 30 Minuten bei 105 Grad C endpolymerisiert. Danach wird die Kammer entformt und der ausgehärtete Gießling entnommen. Der Plattengießling hat beidseitig hochglänzende Oberflächen, ist nicht durchgebogen und zeigt auf beiden Seiten einen visuell identischen Graniteffekt.

### Beispiel 2

### Herstellung von weißem Mahlgut

In 410 g MMA werden 80 g eines PMMA-Perlpolymerisats (PLEXIGUM ® M920) und 0,01 g 2,4 Dimethyl-6-tert.-butylphenol bei ca. 50 Grad C innerhalb 5 Stunden gelöst und danach auf Zimmertemperatur abgekühlt. In diesem MMA/PMMA-Sirup werden 5,0 g Stearinsäure und 50 g Glykoldimethacrylat gelöst. Am Dissolver werden unter mäßigem Rühren 210 g Aluminiumhydroxid (Martinal ® ON 310) und 210 g Martinal ® OD der Fa. Martinswerke, 20 g hochdisperses, amorphes Siliciumdioxid (Aerosil ® 200) und 15 g Titandioxid (TiO₂ RN 56, Hersteller: Kronos GmbH) in den Sirup eingetragen. Danach wird die Suspension mit dem Dissolver mit ca. 20 m/sec ca. 10 Minuten dispergiert. In der auf Raumtemperatur abgekühlten Suspension werden 1 g Bis-(4-tert.-butylcyclohexyl)-peroxidicarbonat gelöst und die eingeschlossenen Luftbläschen unter Anlegen eines Vakuums innerhalb sehr kurzer Zeit aus der Suspension entfernt.

Aus zwei hochglanzpolierten und verchromten Metallplatten (Dicke 4 mm) wird mit Hilfe einer runden PVC-Schnur (Durchmesser 6,0 mm) eine Kammer gebaut. In den Zwischenraum der Metallkammer wird die Suspension eingegossen und die Kammer verschlossen.
Die gefüllte Kammer wird in ein Wasserbad von 45 Grad C eingelegt. Die Polymerisationszeit beträgt 120 Minuten.
Anschließend wird in einem Trockenschrank 30 Minuten bei 105 Grad C endpolymerisiert. Danach wird die Kammer entformt und der ausgehärtete Gießling entnommen.
Der Gießling wird in kleine Stücke zerbrochen und diese in einer geeigneten Mühle gemahlen. Danach werden die gewünschten Mahlgutfraktionen ausgesiebt.

### Beispiel 3

### Herstellung von schwarzem Mahlgut

Die Herstellung erfolgt analog Beispiel 2, wobei anstelle von Titandioxid 15 g Eisen(III)oxid (Produkt BAYFEROX ® 318 M der Bayer AG) verwendet wird.

## Patentansprüche

1. Verfahren zur Herstellung hochgefüllter Kunststoffe auf Polymethylmethacrylatbasis nach dem Gießverfahren, ausgehend von einer Polymervorstufe PVS aus Methylmethacrylat und einem Polymethylmethacrylat-Praepolymerisat, die durch Zusatz mindestens eines partikelförmigen anorganischen Füllstoffs FS in Anteilen von 30 bis 80 Gew.-% (bezogen auf die Füllstoff-Suspension) unter hochtourigem Rühren in eine Füllstoff-Suspension FSS überführt und unter Zusatz mindestens eines radikalischen Initiators in einer geeigneten Form polymerisiert wird,
dadurch gekennzeichnet,
daß man der Füllstoffsuspension FSS verschiedenfarbiges, gefülltes gemahlenes Polymermaterial GP in Mengen von 1 bis 20 Gew.-Teilen (bezogen auf die Füllstoff-Suspension FSS) unter Rühren zusetzt, mit der Maßgabe, daß die Dichte des Mahlgutmaterials GP genau an die Dichte der Füllstoffsuspension angepaßt wird und daß der polymere Bestandteil des Mahlgutmaterials GP hochvernetzt ist.

2. Verfahren gemäß Anspruch 1, dadurch gekennzeichnet, daß der polymere Bestandteil des Mahlgutmaterials GP mit ca. 1 bis 20 Gew.-% mindestens eines vernetzenden Monomeren vernetzt ist.

3. Verfahren gemäß Anspruch 2, dadurch gekennzeichnet, daß der polymere Bestandteil des Mahlgutmaterials GP mit ca. 10 Gew.-% mindestens eines vernetzenden Monomeren vernetzt ist.

4. Verfahren gemäß den Ansprüchen 1 bis 3, dadurch gekennzeichnet, daß das gemahlene Polymermaterial GP einen Teilchendurchmesser im Bereich 0,02 bis ca. 5 mm besitzt.

5. Verfahren gemäß den Ansprüchen 1 bis 4, dadurch gekennzeichnet, daß man der Füllstoffsuspension FSS mindestens 2 verschiedenfarbige, gemahlene Polymermaterialien GP zusetzt.

6. Verfahren gemäß den Ansprüchen 1 bis 5, dadurch gekennzeichnet, daß man als partikelförmigen anorganischen Füllstoff FS Aluminiumhydroxid einsetzt.

7. Verfahren gemäß den Ansprüchen 1 und 6, dadurch gekennzeichnet, daß man der Füllstoffsuspension FSS hochdisperses, amorphes Siliciumdioxid zusetzt.
